(19) Europäisches Patentamt
European Patent Office
Office européen des brevets

(11) **EP 1 302 042 B1**

(12) **EUROPEAN PATENT SPECIFICATION**

(45) Date of publication and mention
of the grant of the patent:
**19.05.2010 Bulletin 2010/20**

(51) Int Cl.:
*H04L 27/26* (2006.01)          *H04L 1/02* (2006.01)
*H04B 14/00* (2006.01)          *H04L 1/06* (2006.01)

(21) Application number: **01952153.3**

(22) Date of filing: **13.06.2001**

(86) International application number:
**PCT/US2001/018993**

(87) International publication number:
**WO 2002/007371 (24.01.2002 Gazette 2002/04)**

(54) **MULTICARRIER TRANSMISSION USING POLARIZED ANTENNAE**

POLARISIERTE ANTENNEN VERWENDENDE MEHRTRÄGERÜBERTRAGUNG

TRANSMISSION ADAPTATIVE EN POLARISATION DOUBLE DE SIGNAUX PAR MULTIPLEXAGE FREQUENTIEL ORTHOGONAL

(84) Designated Contracting States:
**DE FR GB**

(30) Priority: **14.07.2000 US 616128**

(43) Date of publication of application:
**16.04.2003 Bulletin 2003/16**

(73) Proprietor: **Clearwire Legacy LLC
Kirkland, WA 98033 (US)**

(72) Inventors:
 • **ABU-DAYYA, Adnan
   Redmond, WA 98052 (US)**
 • **HIRANO, Michael, R.
   Redmond, WA 98052 (US)**
 • **HOOLE, Elliott
   Redmond, WA 98053 (US)**
 • **LO, Titus
   Redmond, WA 98052 (US)**

(74) Representative: **Dunlop, Hugh Christopher et al
R.G.C. Jenkins & Co
26 Caxton Street
London SW1H 0RJ (GB)**

(56) References cited:
**EP-A- 0 801 473       CA-A- 2 245 240
US-A- 5 471 647       US-A- 5 943 372**

**Description**

**BACKGROUND OF THE INVENTION**

**1. Field of the Invention**

The present invention relates generally to the field of wireless communication services, and more particularly to a system and method of adaptive dual-polarized transmission and reception of orthogonal frequency division multiplexed (OFDM) data in a communications network.

**2. Description of the Related Art**

Polarization diversity, OFDM modulation, and space-time coding are three separate data transmission techniques. Polarization diversity employs orthonogally polarized antennas, and includes several distinctive characteristics. First, signal isolation results from energy polarity instead of spatially-separated signals as in non-polarized systems. Therefore, it is possible to place two orthogonally polarized antenna elements in close physical proximity to one another. Further, a single antenna element can be excited to generate two orthogonally polarized signals. Because of this physically compact arrangement, polarization diversity is widely used for reception at base stations in wireless communication systems.

Second, when being used for transmission, a pair of orthogonally polarized antennas will not generate interfering signal patterns within the physical space they occupy. This is contrary to a pair of antennas that are spatially separated by a distance greater than one wavelength, in which interfering patterns are usually encountered. Interfering patterns in this context are the energy patterns created by the superposition and resulting cancellation between signals transmitted by two antennas spatially separated by a certain interfering distance, normally at or greater than one wavelength.

One result from such interference is that transmitted energy will not reach roughly half the geographic coverage area. Thus, for simultaneous transmission of multiple data signals, it is desirable to avoid spatially separating antennas by more than one wavelength.

Orthogonal frequency division multiplexing (OFDM) is an effective transmission modulation scheme for combating adverse effects of noise sources, particularly multipath fading. OFDM essentially uses tones or subcarriers to carry individual pieces of information. The subcarriers are often narrowband carriers, simultaneously transmitted in large numbers for achieving a high overall data rate.

OFDM modulation can be performed by a simple Inverse Discrete Fourier Transform (IDFT), which can be implemented very efficiently as an Inverse Fast Fourier Transform (IFFT). A Fast Fourier Transform is a well-known modulation process for transforming a nonorthogonal signal into orthogonal components (subcarriers) for transmission and reception over orthogonally polarized channels. Accordingly, at a receiver a Fast Fourier Transform (FFT) process can reverse the transformation. A spectrum of each subcarrier is not completely separate from any others, but rather overlaps.

In a wireless communication system, and in particular for fixed wireless access in a multichannel system, the condition of each channel varies widely. For example, some channels will fade rapidly, whereas others will not. It is therefore desirable in terms of overall system performance (e.g., capacity, data rate, throughput, coverage, etc.) to maximize performance for each individual channel. Accordingly, a system and method for adapting to channel conditions using OFDM transmission is needed.

US 5,471,647 relates to an arrangement for minimising crosstalk in an adaptive transmission antenna array. The array transmits probing signals to receivers, which in turn generate feedback signals that are conveyed to the transmitter. The feedback signals are used to calculate a weight matrix for distributing an information signal among the elements of the antenna array in order to minimise crosstalk.

CA 2,245,240 relates to a system that provides transmit diversity with feedback to enhance the reception of communication signals at a wireless communication terminal. A base station comprises two antennas that transmit multicarrier information signals such as OFDM including pilot tones. The terminal receives and compares the pilot tones to generate a feedback signal containing information about the channels of the respective transmit antennas to the terminal. The feedback signal is transmitted to the base station, which modifies the transmission processing associated with the transmit antennas based upon the feedback signal.

**SUMMARY OF THE INVENTION**

In accordance with the invention there is provided: an adaptive transmission device in accordance with claim 1; a receiver device in accordance with claim 13; and methods of communicating in accordance with claims 19 and 27.

A system and method is provided by the present invention that combines OFDM and dual-polarization for transmission and reception of information symbols. Further, the system and method of the present invention is adaptable to channel conditions. An adaptive, dual-polarization OFDM transmission (ADOT) system according to the present invention includes a transmit processor configured for OFDM modulation of incoming data symbols to be transmitted, and a pair of orthogonally-polarized transmission antennas.

In one embodiment, a transmission device includes a first input for receiving channel condition data of a transmission channel, a second input for receiving an information symbol to be transmitted over the transmission channel, and a memory for storing a plurality of addressable transmit signal matrices, each matrix having first and second signal vectors for producing frequency-domain signals. The transmission device further includes a transmit processor coupled to the first and second inputs, and is configured to map the information symbol to one of the transmit signal matrices corresponding to one of a plurality of transmission modes based on the channel condition data. The transmission device produces first and second frequency-domain signals for transmission over the channel, where each frequency-domain signal is a subcarrier of a portion of the information symbol.

In another embodiment the transmit processor is connected to first and seconde transmission paths, where each path is configured to receive a respective one of the first and second frequency-domain signals produced by the transmit processor. Each transmission path further includes an inverse fast Fourier transform (IFFT) processor for converting the frequency-domain signal into a time-domain signal, a transmitter for converting the time domain signal into radio frequency (RF) signals, and an antenna for transmitting the RF signals. In a preferred embodiment, the first and second transmission path antennas are orthogonally polarized with respect to each other.

In yet another embodiment, a receiver device includes a channel condition data input for receiving channel condition data representative of a transmission channel, first and second receiver inputs, configured to receive respective first and second frequency-domain signals transmitted over the transmission channel, where each frequency-domain signal is a subcarrier of a portion of an information symbol, and a memory for storing a plurality of addressable receive signal matrices. Each one of the matrices is configured to map with the first and second frequency-domain signals for producing a recovered information symbol. The embodiment further includes an adaptive receive processor configured to map the first and second frequency-domain signals to one of the receive signal matrices to recover the information symbol. The one receive signal matrix corresponds to one of a plurality of transmission modes that is selected by the adaptive receive processor based on the channel condition data.

In still yet another embodiment , a method of communicating is provided that includes the steps of determining a condition of a transmission channel based on signals received over the channel, selecting a transmission mode according to the transmission channel condition, and transforming an information symbol into first and second subcarrier signals via a transformation process prescribed by the transmission mode. Another method of communicating includes the steps of receiving first and second subcarrier signals from a transmission channel on a pair of orthogonally polarized receive antennas, and transforming the first and second subcarrier signals into a restored information symbol via a transformation process prescribed by a transmission mode. The transforming step includes a processing step of mapping the subcarrier signals onto a receive signal matrix having first and second signal vectors for producing the restored information symbol.

Further embodiments provide for a transmit processor and a receive processor for a transmission system adaptive to transmission channel conditions. The transmit processor includes a mode controller for receiving channel condition measurements and in response selecting a transmission mode, a data matrix generator for mapping information symbols into a data matrix, a pre-transmission matrix generator for providing a pre-transmission matrix according to the selected transmission mode, and a transmit signal matrix generator for multiplexing the data matrix with the pre-transmission matrix to provide a transmit signal matrix.

The receive processor includes a channel estimator that measures transmission channel conditions, a receive data matrix generator for combining received first and second orthogonal frequency-domain signals into a receive data matrix, a weighting vector generator for generating a weighting vector according to the measured transmission channel conditions, and a symbol estimator configured to map the weighting vector onto the receive data matrix for recovering an information symbol from the first and second orthogonal frequency-domain signals.

These and other embodiments provide for an adaptive OFDM transmission system and method, the full description of which is provided in detail below, with reference to the following figures.

## BRIEF DESCRIPTION OF THE DRAWING

Fig. 1 is a block diagram of an exemplary communication system, illustrating both a transmitter and receiver according to the present invention.

Fig. 2 depicts a transmit processor in more detail according to an embodiment of the invention.

Fig. 3 depicts a receive processor in more detail according to an embodiment of the invention.

Fig. 4 illustrates a mode transition operation for a plurality of transmission modes according to an embodiment of the present invention.

Fig. 5 is a flow chart illustrating a method of communicating according to an embodiment of the invention.

## DETAILED DESCRIPTION OF THE PREFERRED EMBODIMENTS

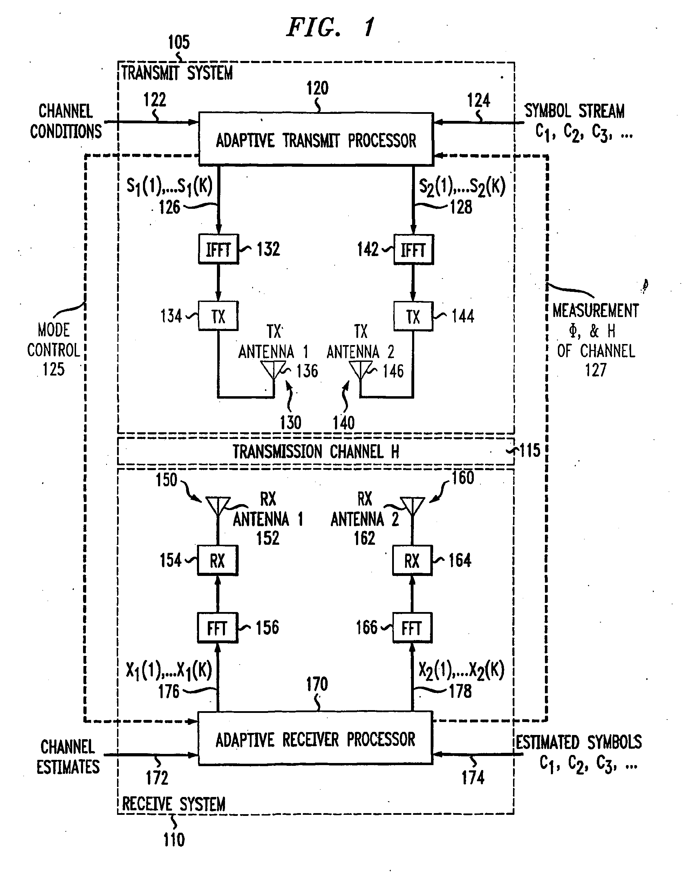

Fig. 1 shows an exemplary embodiment of a communication system 100 according to the present invention. The communication system 100 includes a transmit system 105 and a receive system 110 that communicate via a transmission channel 115. In a preferred embodiment, the transmission channel 115 is a wireless transmission medium, such as a geographic airspace within a cell of a cellular network, for example, and the communication system 100 is a wireless communication system.

The transmit system 105 includes a transmit processor 120. The transmit processor 120 receives a stream of information symbols on an information symbol input 124 for subsequent transmission over the transmission channel 115. The transmit processor further includes a channel condition input 122 configured to receive channel condition data representative of the condition of the transmission channel 115. The channel condition data is provided by the receive system 110 on a feedback loop, based on measurements performed on signals received over the transmission channel. Alternatively, the channel condition data can be provided from a default memory source, or an initial channel condition data source where the data is empirically derived from historical measurements of transmissions over the transmission channel 115. Upon active transmission of information symbols, the transmit system 105 is preferably adapted to accept real-time channel condition data from the receive system 110 provided on a dedicated reverse channel 127.

The transmit processor 120 performs orthogonal frequency division multiplexing (OFDM) of information symbols by mapping the information symbols into a transmit signal matrix via a transformation process prescribed by a selected transmission mode. The transmission mode is based on channel condition data received at the channel condition input 122 and dedicated reverse channel 127, as measured from the transmission channel 115. Thus, the transformation process, and each transmission process of the communication system of the present invention, is adaptable to present channel conditions of the transmission channel 115.

In a preferred embodiment, there are $K$ frequency tones, or subcarriers, in an OFDM frequency slot, which are modulated by information symbols $c_1$, $c_2$, $c_3$...etc. The functions of the transmit processor 120, the transmission modes, and the transformation processes are explained in greater detail below. The transformation process performed by the transmit processor 120 produces two frequency-domain signals, $s_1(1),...s_1(K)$ and $s_2(1),...s_2(K)$, from the transmit signal matrix, which includes first and second signal vectors. The frequency-domain signals represent OFDM subcarrier signals of the original information symbol and are provided on outputs 126 and 128 to a first and second transmission path, 130 and 140, respectively.

Each transmission path 130, 140 includes an inverse fast Fourier transform (IFFT) processor 132, 142, that converts the frequency-domain signals into time-domain signals. Next, a transmitter 134, 144 converts, via an appropriate method or mechanism, the digital time-domain signals into radio frequency (RF) signals for transmission. Finally, two transmit antennas 136, 146 transmit the RF signals over the transmission channel 115. For optimal signal performance of the transmitted RF signals, and to take advantage of the channel conditions on which the transformation process in the transmit processor 120 is based, the transmit antennas 136, 146 are orthogonally polarized to each other.

Fig. 1 further shows a receive system 110 according to an embodiment of the present invention. The receive system 110 includes two receive paths 150 and 160, having respective orthogonally polarized receive antennas 152 and 162. Each receive path 150, 160 further includes a receiver 154, 164 that converts RF signals received on the receive antennas 152, 162 into digital time-domain signals. The time-domain signals are converted into frequency-domain signals by fast Fourier transform (FFT) processors 156, 166.

The output of each FFT processor 156, 166 is fed into a receive processor 170 via receiver processor inputs 176 and 178. The receiver processor 170 also receives mode control signals on a dedicated forward channel 125 from the transmit system 105. The mode control signals prescribe a transmission mode according to which the transmit system 105 operates and transmits; therefore, the receive processor 170 will need an indication of the transmission mode in order to restore the information symbols in the receive system 110.

The receive processor 170 combines the frequency-domain OFDM subcarrier signals according to a reverse transformation process prescribed by the transmission mode. The combined signals represent restored original information symbols $c_1$, $c_2$, $c_3$...etc. The receive processor 170 additionally takes measurements on the received signals to measure for channel condition data, for sending back to the transmit system 105 via dedicated reverse channel 127. The measurements include interference levels and noise and are explained more fully below.

In order to take advantage of, and adapt to, different channel conditions, a number of transmission modes are prescribed for different ranges of channel conditions.

The communication system of the present invention can automatically switch to a particular transmission mode for a given set of channel conditions. The processes and procedures for mode selection and operation are described below.

With two orthogonally polarized transmit antennas 136, 146, two ($K$x 1)- signal vectors, which can be viewed as a transmit signal matrix (TSM) S, can be transmitted at the same time. The TSM can be represented as:

$$S = \begin{bmatrix} s_1(1)...s_1(K) \\ s_2(1)...s_2(K) \end{bmatrix} = VC$$

where $V$ represents a 2 x 2 pre-transmission weighting matrix and $C$ represents a 2 x $K$ data matrix consisting of symbols to be transmitted. The pre-transmission weighting matrix is employed to assign a relative weighted energy level to a specific subcarrier signal, i.e. each symbol to be transmitted. $V$ and $C$ are both determined according to whichever transmission mode is selected.

With two orthogonally polarized receive antennas 152, 162, the receive signal matrix (RSM) is represented as:

$$X = \begin{bmatrix} x_1(1)\cdots x_1(K) \\ x_2(1)\cdots x_2(K) \end{bmatrix}$$

In the case where the bandwidth of the frequency slot is sufficiently narrow so that a channel coefficient applies to all the tones within the slot, the channel can be represented by a 2 x 2 matrix:

$$H = \begin{bmatrix} h_{11} h_{12} \\ h_{21} h_{22} \end{bmatrix}$$

where $h_{lk}$ represents a channel coefficient for a transmit antenna k and a receive antenna $l$. In the present invention, noise is measured when assessing channel conditions. The RSM can thus be modeled as:

$$X = HS + N$$

where N represents a 2 x $K$ white Gaussian noise matrix.

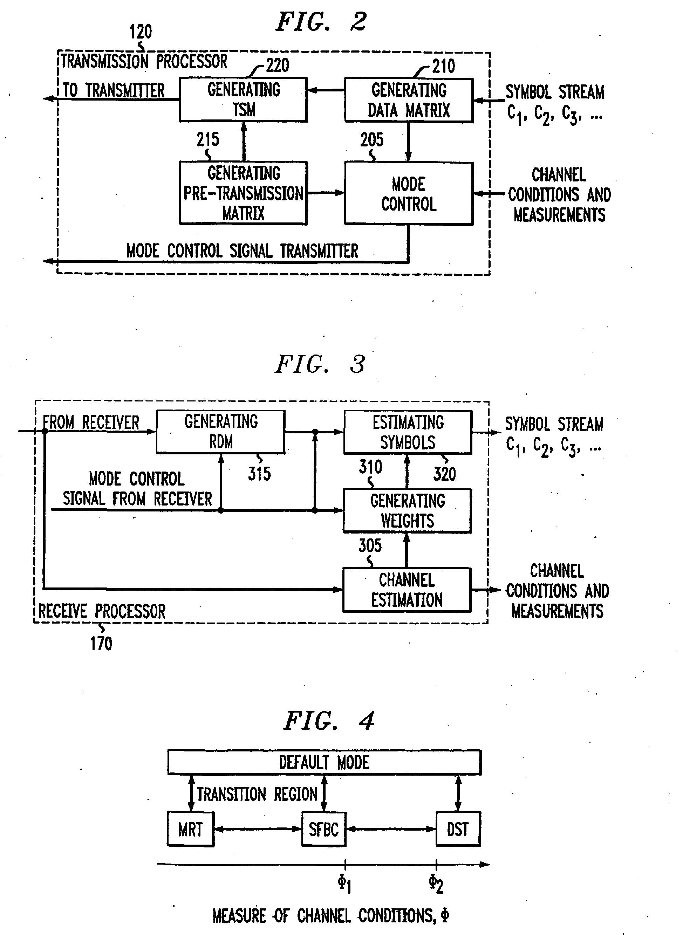

Figure 2 is a simplified block diagram of a transmit processor 120 to illustrate its functions in greater detail. Channel conditions and measurements in the form of channel condition data are received by a mode controller 205. The mode controller 205 includes a storage device storing a plurality of transmission mode instructions. The instructions direct the mode controller 205 and the entire transmit processor 120 to operate according to a selected transmission mode. The selected transmission mode, via the instructions, are provided specifically to a data matrix generator 210 and a pre-transmission matrix generator 215.

The data matrix generator 210 receives a stream of information symbols, and generates a data matrix. The data matrix partitions individual data symbols into a matrix of symbols to be transmitted, and upon which modulation and weighting coefficients may be applied. The data matrix provides an information symbol in a format for OFDM modulation. A pre-transmission matrix generator 215, responsive to the transmission mode, generates a pre-transmission matrix of weighting coefficients. The data matrix and pre-transmission weighting matrix are mapped together by a transmit signal matrix generator 220 to produce a transmit signal matrix.

Figure 3 shows an embodiment of receive processor 170 in greater detail. A channel estimator 305 receives signals that have been transmitted over the transmission channel, or other forward channel from the transmission system. The channel estimator 305 measures the signals in order to assess the condition of the transmission channel. Channel condition data is provided by the channel estimator 305 to a weighting vector generator 310, which will determine the proper weighting vectors to be applied to transmit symbols in each received OFDM signal matrix. The channel estimator can also provide channel condition data back to the transmit processor via a dedicated feedback line.

A receive data matrix generator 315 receives signals from the transmission channel via a receiver system. The signals preferably have been converted into first and second orthogonal frequency-domain signals. The receive data matrix generator 315 maps related frequency-domain signals into a receive data matrix which is adapted for conversion into a restored signal by demodulation techniques. A symbol estimator 320 maps the weighting vectors onto the receive data matrix to recover an information symbol from the first and second frequency-domain signals supplied from the receiver. The recovered information symbol should be very close to an original information symbol that was modulated and transmitted by the transmission system.

**Transmission Modes**

The communication system and method of the present invention operates according to a number of transmission modes. The transmission modes include a default mode, a dual-symbol transmission (DST) mode, a space-frequency block coding (SFBC) mode, and a maximum ratio transmission (MRT) mode. The following discussion is exemplary only, and other transmission modes may be employed to take advantage of other specific channel conditions and system configurations.

**Default Mode**

In the default mode, the same signal is transmitted at a single OFDM tone via the two orthogonally polarized transmit antennas and two orthogonally polarized receive antennas. It should be pointed out again that orthogonally polarized antennas do not generate the problematic interfering patterns of typical antenna systems. The default mode is the simplest among the other modes described herein in terms of processing requirements, and provides for a two-level diversity gain. The pre-transmission weighting matrix is expressed as an identity matrix:

$$\mathbf{V} = \begin{bmatrix} 1 & 0 \\ 0 & 1 \end{bmatrix}$$

and the data matrix is given as:

$$\mathbf{C} = \begin{bmatrix} c_1 c_2 \cdots c_K \\ c_1 c_2 \cdots c_K \end{bmatrix}$$

Therefore, the TSM is:

$$\mathbf{S} = \begin{bmatrix} c_1 c_2 \cdots c_K \\ c_1 c_2 \cdots c_K \end{bmatrix}$$

To recover the transmitted symbols at the receiver, the receive adaptive processor applies a weighting vector to the received signal matrix, X, that is:

$$\begin{bmatrix} \tilde{c}_1 \tilde{c}_2 \cdots \tilde{c}_K \end{bmatrix} = w^\dagger \mathbf{X}$$

where † denotes the Mermitian transpose operation and w is given by:

$$w = \frac{1}{\sqrt{|h_{11} + h_{12}|^2 + |h_{21} + h_{22}|^2}} \begin{bmatrix} h_{11} + h_{12} \\ h_{21} + h_{22} \end{bmatrix}$$

and

$$X_d = X$$

In the default mode, the gain in signal-to-noise ratio (SNR) over a communication system employing only a single transmit antenna and a single receive antenna is:

$$\frac{1}{2}[|h_{11} + h_{12}|^2 + |h_{21} + h_{22}|^2]$$

**DST Mode**

In the DST mode, the two independent symbols are transmitted at a single OFDM tone via the two orthogonally polarized transmit and receive antennas. The pre-transmission weighting matrix is an identity matrix:

$$V = \begin{bmatrix} 1 & 0 \\ 0 & 1 \end{bmatrix}$$

and the data matrix is:

$$C = \begin{bmatrix} c_1 c_3 \cdots c_{2K-1} \\ c_2 c_4 \cdots c_{2K} \end{bmatrix}$$

In effect, $2K$ symbols can be transmitted, instead of just $K$. That is, the throughput is doubled. For the DST mode, the TSM takes the following form:

$$S = \begin{bmatrix} c_1 c_3 \cdots c_{2K-1} \\ c_2 c_4 \cdots c_{2K} \end{bmatrix}$$

To recover the transmitted symbols at the receiver, the adaptive receive processor applies the following non-linear constrained optimization:

7

$$\min_{\{c_i\}\in s} \left\| w^+ S - X_d \right\|_2$$

where

$$w = H^+$$

and

$$X_d = X$$

The DST mode is relatively more complex in terms of processing requirements compared with the other transmission modes described herein.

**SFBC Mode**

In the SFBC mode, space-frequency block coding is used which takes advantage of two orthogonally polarized antennas at the transmit system. Although the SFBC mode is more complex than the default mode, it provides a four-level diversity gain which is useful for low quality channels, such as those at an edge of a cell in a cellular network, for example. Like the DST and default modes, the pre-transmission weighting matrix is an identity matrix:

$$\mathbf{V} = \begin{bmatrix} 1 & 0 \\ 0 & 1 \end{bmatrix}$$

however the data matrix is given as:

$$\mathbf{C} = \begin{bmatrix} c_1 & -c^*_2 & c_3 & -c^*_4 & \cdots & c_{K-1} & -c^*_K \\ c_2 & c^*_1 & c_4 & c^*_3 & \cdots & c_K & c^*_{K-1} \end{bmatrix}$$

In the SFBC mode, the number of tones required in the frequency slot must be even. The TSM therefore takes the following form:

$$\mathbf{S} = \begin{bmatrix} c_l & -c^*_2 & c_3 & -c^*_4 & \cdots & c_{k-1} & -c^*_K \\ c_2 & c^*_1 & c_4 & c^*_3 & \cdots & c_K & c^*_{K-1} \end{bmatrix}$$

To recover the transmitted symbols at the receiver, the receive adaptive processor applies the following linear operation:

$$\begin{bmatrix} \tilde{c}_1\tilde{c}_3\cdots\tilde{c}_{K-1} \\ \tilde{c}_2\tilde{c}_4\cdots\tilde{c}_K \end{bmatrix} = \begin{bmatrix} h_{11}*\ h_{12}* \\ h_{12}-h_{11} \\ h_{21}*\ h_{22}* \\ h_{22}-h_{21} \end{bmatrix}^T \begin{bmatrix} x_1(1) & x_1(3) & \cdots & x_1(K-1) \\ x_2*(1) & x2*(3) & \cdots & x_2*(K-1) \\ x_1(2) & x_1(4) & \cdots & x_2(K) \\ x_2*(2) & x_2*(4) & \cdots & x_2*(K) \end{bmatrix}$$

In this mode, the gain in SNR over the case of a single transmit antenna and a single receive antenna is:

$$\frac{1}{2}\left[|h_{11}|^2 + |h_{12}|^2 + |h_{21}|^2 + |h_{22}|^2\right]$$

**MRT Mode**

In the MRT mode, a maximum-ratio-transmission technique is used which provides the highest gain in SNR compared to the other modes described above. Therefore, this mode will provide additional SNR margin over the SFBC mode, if required. In the MRT mode, the pre-transmission weighting matrix is:

$$\mathbf{V} = \begin{bmatrix} v_1 & 0 \\ 0 & v_2 \end{bmatrix} = Diag\left(\frac{1}{a}\mathbf{H}\begin{bmatrix} 1 \\ w \end{bmatrix}\right)$$

where a is given by

$$a = \sqrt{|h_{11}|^2 + |h_{12}|^2 + |h_{21}|^2 + |h_{22}|^2 + 2|h_{11}h*_{21} + h_{12}h*_{22}|}$$

and w is given by

$$w = \frac{h_{11}h*_{21} + h_{12}h*_{22}}{|h_{11}h*_{21} + h_{12}h*_{22}|}$$

For the MRT mode to be selected, data for H should be available to the transmitter. The data matrix is provided as:

$$\mathbf{c} = \begin{bmatrix} c_1c_2\cdots c_K \\ c_1c_2\cdots c_K \end{bmatrix}$$

Therefore, the TSM is:

$$\mathbf{s} = \begin{bmatrix} v_1 & 0 \\ 0 & v_2 \end{bmatrix}\begin{bmatrix} c_1c_2\cdots c_K \\ c_1c_2\cdots c_K \end{bmatrix}$$

To recover the transmitted symbols at the receiver, the receive adaptive processor applies a weighting vector to the received signal matrix, X, that is:

$$[\tilde{c}_1 \tilde{c}_2 \cdots \tilde{c}_K] = [1 \ w] \ X$$

In the MRT mode, the gain in SNR over the case of a single transmit antenna and a single receive antenna is:

$$\frac{1}{2}[|h_{11}|^2 + |h_{12}|^2 + |h_{21}|^2 + |h_{22}|^2 + |h_{11}h*_{21} + h_{12}h*_{22}| \ ]$$

## Mode Operation

According to the present invention, transmission commences with the communication system operating in one of several transmission modes, preferably in the default mode upon commencement. The receive system measures the conditions and feeds the measurement information back to the transmit system via a dedicated reverse channel, which can be either a time- or frequency-domain channel, for example. The transmit system then assesses the channel condition data to determine the optimal transmission mode for the measured transmission channel. When the transmit system switches to another mode, it will indicate the new mode to the receiver via a dedicated forward channel. In one embodiment, the receiver is notified just prior to the switch being made.

Regardless of which mode the transmission is in, the receiver is adapted to periodically measure the conditions of the transmission channel via newly acquired channel condition data, and report the channel conditions back to the transmit system via a dedicated reverse channel. Furthermore, if the dedicated reverse channel has a sufficiently large bandwidth, the actual channel coefficients may be fed back to the transmitter to realize the MRT mode when selection of that mode is desired.

## Metrics For Mode Selection

The transmission channel is measured, and a transmission mode is selected, based on a number of metrics, including a mean squared error (MSE), block error rate (BLER), and channel correlation matrix (CM) of signals received from the transmission channel.

MSE is directly related to the signal-to-interference-plus-noise ratio and is a general indicator of overall performance. BLER is another indicator of overall performance. Normally, MSE and BLER are proportional to one another. However, consistently measuring both MSE and BLER can increase the reliability of the metrics. Any indication of inconsistency should trigger a high priority for switching back to a more robust mode for stability, such as the default mode.

The last metric, channel correlation matrix (CM), provides the magnitude of the cross-correlation coefficient $(p_x)$ of the vector channels, which indicates the amount of cross-polarization at the receive system. This is an especially critical metric for the DST mode. The overall measure for the channel conditions is a function of these measurements: $\Phi = f(MSE, BLER, p_x)$

## Mode Transition

Fig. 4 illustrates an embodiment of a mode transition operation according to the present invention. The transition region functions as a buffer to prevent excessive mode switching. In the transition region, the system will still operate in its current mode. For example, referring to Fig. 4, the system will switch from the SFBC mode to the DST mode only if $\Phi_2$ is at a level that exceeds $\Phi$ $M_1$. On the other hand, the system will switch back from the DST mode to the SFBC mode when $\Phi$ is at a level below $\Phi_1$, for example.

The system will switch from the default mode to any other mode, and vice versa. Likewise, it can switch from the SFBC mode to any other modes, and vice versa. However, in one embodiment of the invention, there is no direct transition between the MRT mode and the DST mode in order to preserve processing resources. Still other modes may be employed and a similar transition scheme developed that economizes the resources at both the transmit and receive systems.

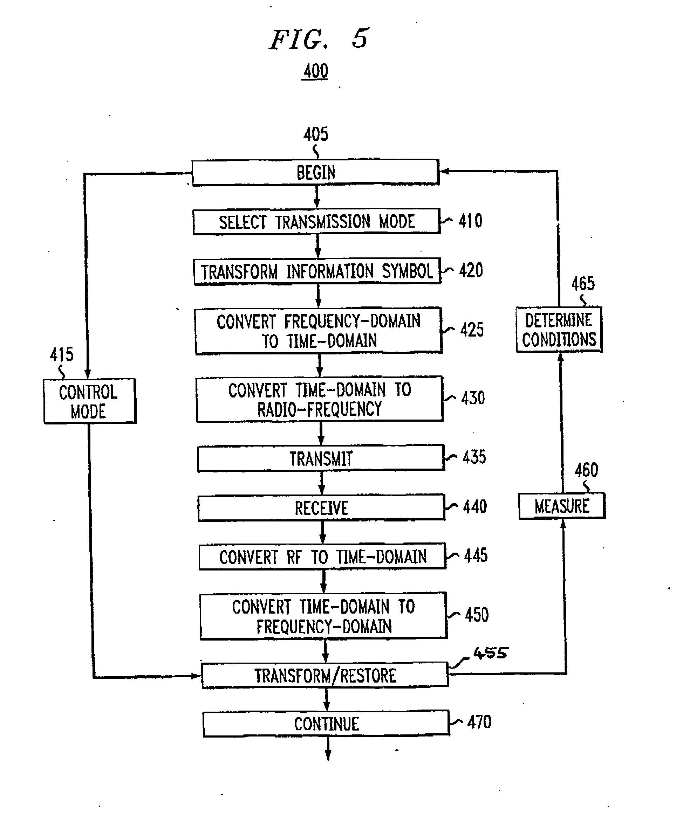

Referring back to Fig. 5 a method of communicating, generally referenced as 400, is illustrated. At block 405, an information symbol to be transmitted is provided to the transmit system. In the embodiment, the information symbol is a digital representation of data, but provided in a format that is not conducive for efficient transmission. Thus, at block 410, a transmission mode is selected from a number of different transmission modes that will optimally execute transmission of the information symbol. In one embodiment, a default mode may be selected if the information to be transmitted is beginning a transmission session, or if there is no channel condition data on which to base the selection. Alternatively, at block 465 as described below, channel condition data is provided as a measure of certain channel conditions, from block 460, which will prescribe the selection of a particular transmission mode to optimize communication.

At block 420, the information symbol is transformed according to an OFDM process, based on a selected one of the transmission modes. The OFDM process divides an information symbol into distinct parts, and modulates each part by a subcarrier frequency, where each modulation is orthogonal to the others. In the preferred embodiment, the information symbol is mapped, via an address, to a transmit signal matrix stored at a memory location in a memory. The memory location stores first and second signal vectors that each represent an orthogonally polarized multiplexed factor by which the OFDM signals are produced. For each transmission mode, there may be a different transmit signal matrix that is stored in a separate addressable memory location. Or, in an alternative embodiment, there may be separate memories that are accessible depending on which transmission mode is selected.

At blocks 425 and 430, the OFDM signal is prepared for transmission by conversion processes. At block 425, the frequency-domain OFDM signal is converted into a time-domain signal. In one embodiment, the conversion is performed by an inverse fast Fourier transform (IFFT); however in alternative embodiments other transforms may be employed. At block 430, the digital time-domain signal is converted into RF signals by an appropriate mechanism.

Conversion of the time-domain signal into RF signals at block 430 can be accomplished by an RF transmitter, which is generally well-known in the art.

However, according to the present invention, the step shown in block 430, as well as the steps shown in blocks 420 and 425, are executed on separate OFDM signals on separate transmission paths for transmission over orthogonally polarized transmit antennas. Thus, referring back to block 420, after the OFDM signals are produced, the first OFDM signal is divided from the second OFDM signal for transmission over the respective first and second transmission paths. The RF signals are transmitted over the transmission channel at block 435.

The method of communicating includes a process of receiving, which is illustrated with reference first to block 440. An RF signal, having been transmitted over the transmission channel, is received on orthogonally polarized receive antennas. The separate RF signals received on the antennas are then subjected to substantially the same process along separate receive paths; therefore, for simplicity the rest of the process will be shown and described with reference to a single path flow. At block 445, the RF signal is converted into a digital signal, preferably a time-domain signal, that is converted into a frequency-domain signal at block 450. In one embodiment of the invention, the conversion at block 450 is according to a fast Fourier transform (FFT) process.

At block 455, the frequency-domain signal on each receive path is combined to recover the original information symbol. The combining process is preferably accomplished with a transformation process that corresponds with the transmission mode selected at block 410.

Information about the selected mode is provided to the transformation block 455 through a dedicated forward channel. Also at block 455, transmission channel-data is provided to block 460 where channel condition measurements are performed. Based on the measurements, at block 465 channel condition data are produced and provided back to block 410 preferably over a dedicated reverse channel.

The transformation at block 455 again can be accomplished by storing a number of addressable receive signal matrices, each of which corresponds to a particular transmission mode. Once the transmission mode is provided at block 415, a corresponding receive signal matrix is accessed from a memory. One of a plurality of memory locations is addressed and accessed by the first and second OFDM signals. Information stored in the accessed memory location is provided which yields a recovered information symbol. In a preferred embodiment, the recovered information symbol is a closest estimate of the originally transmitted information symbol.

Clearly, other embodiments and modifications of this invention will occur readily to those of ordinary skill in the art in view of these teachings. Therefore, this invention is to be limited only by following claims, which include all such embodiments and modifications when viewed in conjunction with the above specification and accompanying drawings.

**Claims**

1. An adaptive transmission device (105), comprising:

    a first input (122) for receiving channel condition data of a transmission channel (115); and
    a second input (124) for receiving an information symbol to be transmitted over the transmission channel (115);

    **characterised in that** the device further comprises:

a memory for storing a plurality of addressable transmit signal matrices, each matrix having first and second signal vectors for producing frequency-domain signals;

an adaptive transmit processor (120) coupled to the first and second inputs (122, 124), being configured to map the information symbol to one of the transmit signal matrices corresponding to one of a plurality of transmission modes selected based on the channel condition data, and to produce first and second frequency-domain signals, wherein each frequency-domain signal is a subcarrier of a portion of the information symbol;

a first output (126) for providing the first frequency-domain signal; and

a second output (128) for providing the second frequency-domain signal.

2. The device according to claim 1, further comprising a selector circuit coupled with the first input (122) and configured to measure the channel condition data and select the one of a plurality of transmission modes.

3. The device according to claim 2, wherein the selector circuit includes a switch for switching from one transmission mode to another transmission mode based on a change in the channel condition data.

4. The device according to any of the preceding claims, wherein the plurality of transmission modes includes:

a default mode, wherein the first and second frequency-domain signals are substantially equal;

a dual-symbol transmission mode, wherein the first frequency-domain signal and the second frequency-domain signal are independent;

a space-frequency block coding mode, in which the first and second frequency-domain signals are provided multiple levels of diversity gain; and

a maximum-ratio transmission mode, in which the first and second frequency-domain signals are provided signal gain.

5. The device according to any of the preceding claims, further comprising first and second transmission paths wherein first and second transmission paths each include:

an inverse fast Fourier transform processor (132, 142) for converting a frequency-domain signal into a time-domain signal; and

a transmitter (134, 144) for converting the time-domain signal into a radio-frequency signal.

6. The device according to claim 5, wherein the transmitter (134, 144) further includes a dedicated forward channel (125) for providing mode control signals to a receiver (110).

7. The device according to any of the preceding claims, further comprising a receiver device (110), the receiver device comprising:

a channel condition data input for receiving channel condition data representative of the transmission channel (115);

first and second receiver inputs (176, 178), configured to receive respective first and second frequency-domain signals transmitted over the transmission channel (115), where each frequency-domain signal is a subcarrier of a portion of the information symbol;

a memory for storing a plurality of addressable receive signal matrices, wherein each matrix is adapted for being combined with the first and second frequency-domain signals for recovering the information symbol; and

an adaptive receive processor (170) configured to map the first and second frequency-domain signals to one of the receive signal matrices corresponding to the selected one of the plurality of transmission modes to recover the information symbol.

8. The device according to claim 7, the receiver device (110) further comprising a switch, responsive to the channel condition data input, configured to switch from the one of the plurality of transmission modes to another of the plurality of transmission modes.

9. The device according to claim 7 or claim 8, wherein the adaptive receive processor (170) further includes a measuring circuit for measuring interference and noise indicia of the received frequency-domain signals, and for providing the indicia on a transmission channel feedback output.

10. The device according to any of claims 7 to 9, further including first and second receive path antennas (152, 162) wherein the first and second receive path antennas (152, 162) are orthogonally polarized with respect to each other.

**11.** The device according to any of claims 7 to 9, wherein the receiver device (110) further includes a dedicated reverse channel (127) for providing the channel condition data to a transmitter (105).

**12.** The device according to any of claims 7 to 10, wherein the receive processor (170) further includes means for switching to a particular transmission mode according to mode control information provided by a transmitter (105).

**13.** A receiver device (110) **characterised by**:

a channel condition data input for receiving channel condition data representative of a transmission channel (115);
first and second receiver inputs (176, 178), configured to receive respective first and second frequency-domain signals transmitted over the transmission channel (115), where each frequency-domain signal is a subcarrier of a portion of an information symbol;
a memory for storing a plurality of addressable receive signal matrices, wherein each matrix is adapted for being combined with the first and second frequency-domain signals for recovering an information symbol; and
an adaptive receive processor (170) configured to map the first and second frequency-domain signals to one of the receive signal matrices corresponding to one of a plurality of transmission modes based on the channel condition data, to recover the information symbol.

**14.** The device according to claim 13, further comprising a switch, responsive to the channel condition data input, configured to switch from the one of the plurality of transmission modes to another of the plurality of transmission modes.

**15.** The device according to claim 13 or claim 14, wherein the adaptive receive process further includes a measuring circuit for measuring interference and noise indicia of the received frequency-domain signals, and for providing the indicia on a transmission channel feedback output.

**16.** The device according to any of claims 13 to 15, further including first and second receive path antennas (152, 162) wherein the first and second receive path antennas (152, 162) are orthogonally polarized with respect to each other.

**17.** The device according to any of claims 13 to 15, wherein the device further includes a dedicated reverse channel (127) for providing the channel condition data to a transmitter (105).

**18.** The device according to any of claims 13 to 16, wherein the receive processor (170) further includes means for switching to a particular transmission mode according to mode control information provided by a transmitter (105).

**19.** A method of communicating, comprising:

determining (465) a condition of a transmission channel (115) based on signals received over the channel;

**characterised in that** the method further comprises:

selecting (410) a transmission mode from among a plurality of transmission modes based on the transmission channel condition;
transforming (420) an information symbol into first and second subcarrier signals via a transformation process prescribed by the selected transmission mode, wherein the information symbol is mapped to a transmit signal matrix corresponding to the selected one of the plurality of transmission modes; and
transmitting (435) the subcarrier signals over the transmission channel (115) via a pair of orthogonally polarized transmission antennas (136, 146).

**20.** The method according to claim 19, wherein the transmitting (435) comprises simultaneously transmitting the first and the second subcarrier signals.

**21.** The method according to claim 19 or claim 20, wherein the transmitting (435) comprises:

converting each subcarrier signal into a frequency-domain signal; and

converting (425) each frequency-domain signal into a time-domain signal.

22. The method according to claim 21, wherein converting (425) each frequency-domain signal into a time-domain signal comprises converting via an inverse fast Fourier transform.

23. The method according to claim 20 or claim 21, wherein the transmitting (435) further comprises converting (430) each time-domain signal into a radio frequency signal.

24. The method according to any of claims 20 to 22, wherein the information symbol is mapped onto a transmit signal matrix having first and second signal vectors for producing the first and second subcarrier signals.

25. The method according to any of claims 20 to 23, further comprising receiving (440) the subcarrier signals over the transmission channel via a pair of orthogonally polarized receive antennas (150, 160).

26. The method according to claim 25, further comprising converting (455) the first and second subcarrier signals via a transformation process prescribed by the transmission mode, wherein the subcarrier signals are mapped onto a transmit signal matrix having first and second signal vectors for restoring the information symbol.

27. A method of communicating, **characterised by**:

receiving (440) first and second subcarrier signals from a transmission channel (115) on a pair of orthogonally polarized receive antennas (150, 160);
transforming (455) the first and second subcarrier signals into a restored information symbol via a transformation process prescribed by one of a plurality of transmission modes, wherein the subcarrier signals are mapped onto a receive signal matrix having first and second signal vectors for producing the restored information symbol; and
measuring (460) channel conditions of the transmission channel (115), wherein the transmission mode is selected based on the channel conditions.

28. The method according to claim 27, wherein the receiving (440) comprises receiving the subcarrier signals as radio frequency signals.

29. The method according to claim 28, wherein the receiving (440) further comprises converting (445) each radio frequency signal into a time-domain signal.

30. The method according to claim 29, wherein the receiving (440) further comprises converting (450) each time-domain signal into a frequency-domain signal.

31. The method according to claim 30, wherein the converting is accomplished by a fast Fourier transform process.

32. The method according to any of claims 27 to 31, further comprising providing channel condition data based on the channel conditions to a transmitter for subsequent transmissions.

**Patentansprüche**

1. Adaptive Übertragungsvorrichtung (105), umfassend:

einen ersten Eingang (122) für den Empfang von Kanalzustandsdaten eines Übertragungskanals (115); und
einen zweiten Eingang (124) für den Empfang eines Informationssymbols, das über den Übertragungskanal (115) zu übertragen ist;

**dadurch gekennzeichnet, dass** die Vorrichtung ferner umfasst:

einen Speicher zum Speichern von mehreren adressierbaren Übertragungssignalmatrizen, wobei jede Matrix erste und zweite Signalvektoren für die Erzeugung von Frequenzbereichssignalen aufweist;
einen an die ersten und zweiten Eingänge (122, 124) angekoppelten adaptiven Übertragungsprozessor (120), der ausgelegt ist, das Informationssymbol auf eine der Übertragungssignalmatrizen abzubilden, die sich auf eine von mehreren Übertragungsbetriebsarten bezieht, die auf Basis der Kanalzustandsdaten ausgewählt wurde, und erste und zweite Frequenzbereichssignale zu erzeugen, wobei jedes Frequenzbereichssignal ein Unterträger eines Teils des Informationssymbols ist;
einen ersten Ausgang (126) zum Bereitstellen des ersten Frequenzbereichssignals; und
einen zweiten Ausgang (128) zum Bereitstellen des zweiten Frequenzbereichssignals.

**2.** Vorrichtung nach Anspruch 1, ferner einen Auswahlschaltkreis umfassend, der mit dem ersten Eingang (122) verbunden und ausgelegt ist, die Kanalzustandsdaten zu messen und die eine von mehreren Übertragungsbetriebsarten auszuwählen.

**3.** Vorrichtung nach Anspruch 2, wobei der Auswahlschaltkreis einen Schalter aufweist, um auf der Basis einer Veränderung in den Kanalzustandsdaten von einer Übertragungsbetriebsart in eine andere Übertragungsbetriebsart zu schalten.

**4.** Vorrichtung nach einem der vorhergehenden Ansprüche, wobei die mehreren Übertragungsbetriebsarten umfassen:

eine Standardbetriebsart, in der die ersten und zweiten Frequenzbereichssignale im Wesentlichen gleich sind;
eine Dualsymbol-Übertragungsbetriebsart, in der das erste Frequenzbereichsignal und das zweite Frequenzbereichssignal unabhängig sind;
eine Raumfrequenz-Slockcodierungsbetriebsart, in der die ersten und zweiten Frequenzbereichssignale auf mehreren Stufen der Diversity-Verstärkung bereitgestellt werden; und
eine Maximalverhältnis-Übertragungsbetriebsart, in der die ersten und zweiten Frequenzbereichssignale signalverstärkt bereitgestellt werden.

**5.** Vorrichtung nach einem der vorhergehenden Ansprüche, ferner erste und zweite Übertragungswege umfassend, wobei jeder der ersten und zweiten ilbertragungswege einschließt:

einen Prozessor für die inverse schnelle Fouriertransformation (132, 142), um ein Frequenzbereichssignal in ein Zeitbereichssignal umzuwandeln; und
einen Übertrager (134, 144), um das Zeitbereichssignal in ein Funkfrequenzsignal umzuwandeln.

**6.** Vorrichtung nach Anspruch 5, wobei der Übertrager (134, 144) ferner einen zugeordneten Vorwärtskanal (125) aufweist, um einem Empfänger (110) Betriebsartensteuersignale bereitzustellen.

**7.** Vorrichtung nach einem der vorhergehenden Ansprüche, ferner eine Empfängervorrichtung (110) umfassend, wobei die Empfängervorrichtung aufweist:

einen Kanalzustandsdateneingang für den Empfang von Kanalzustandsdaten, die den Übertragungskanal (115) kennzeichnen;
erste und zweite Empfängereingänge (176, 178), die für den Empfang entsprechender erster und zweiter Frequenzbereichssignale ausgelegt sind, die über den Übertragungskanal (115) übertragen werden, wobei jedes Frequenzbereichssignal ein Unterträger eines Teils des Informationssymbols ist;
einen Speicher zum Speichern von mehreren adressierbaren Empfangssignalmatrizen, wobei jede Matrix geeignet ist, mit den ersten und zweiten Frequenzbereichssignalen kombiniert zu werden, um das Informationssymbol wiederherzustellen; und
einen adaptiven Empfangsprozessor (170), der ausgelegt ist, die ersten und zweiten Frequenzbereichssignale auf eine der Empfangssignalmatrizen abzubilden, die sich auf die eine ausgewählte von den mehreren Übertragungsbetriebsarten bezieht, um das Informationssymbol wiederherzustellen.

**8.** Vorrichtung nach Anspruch 7, wobei die Empfängervorrichtung (110) ferner einen auf den Kanalzustandsdatendateneingang ansprechenden Schalter aufweist, der ausgelegt ist, von einer der mehreren Übertragungsbetriebsarten in eine andere von den mehreren Übertragungsbetriebsarten zu schalten.

**9.** Vorrichtung nach Anspruch 7 oder Anspruch 8, wobei der adaptive Empfangsprozessor (170) einen Messschaltkreis zum Messen von Interferenz- und Rauschanzeichen der empfangenen Frequenzbereichssignale und zum Bereitstellen der Anzeichen an einem Übertragungskanal-Rückkopplungsausgang aufweist.

**10.** Vorrichtung nach einem der Ansprüche 7 bis 9, ferner erste und zweite Empfangswegantennen (152, 162) aufweisend, wobei die ersten und zweiten Empfangswegantennen (152, 162) zueinander orthogonal polarisiert sind.

**11.** Vorrichtung nach einem der Ansprüche 7 bis 9, wobei die Empfängervorrichtung (110) ferner einen zugeordneten Rückwärtskanal (127) aufweist, um die xanalzustandsdaten einem Übertrager (105) bereitzustellen.

**12.** Vorrichtung nach einem der Ansprüche 7 bis 10, wobei der Empfangsprozessor (170) ferner Mittel aufweist, um entsprechend den Betriebsartsteuerinformationen, die durch einen Übertrager (105) bereitgestellt werden, in eine spezielle Übertragungsbetriebsart zu schalten.

**13.** Empfängervorrichtung (110), **gekennzeichnet durch**:

einen Kanaazustandsdateneingang für den Empfang von Kanalzustandsdaten, die den Übertragungskanal (115) kennzeichnen;
erste und zweite Empfängereingänge (176, 178), die für den Empfang entsprechender erster und zweiter Frequenzbereichssignale ausgelegt sind, die über den Übertragungskanal (115) übertragen werden, wobei jedes Frequenzbereichssignal ein Unterträger eines Teils eines Informationssymbols ist;
einen Speicher zum Speichern von mehreren adressierbaren Empfangssignalmatrizen, wobei jede Matrix geeignet ist, mit den ersten und zweiten Frequenzbereichssignalen kombiniert zu werden, um ein Informationssymbol wiederherzustellen; und
einen adaptiven Empfangsprozessor (170), der ausgelegt ist, die ersten und zweiten Frequenzbereichssignale auf eine der Empfangssignalmatrizen abzubilden, die sich auf Basis der Kanalzustandsdaten auf eine von mehreren Übertragungsbetriebsarten bezieht, um das Informationssymbol wiederherzustellen.

**14.** Vorrichtung nach Anspruch 13, ferner einen auf den Kanalzustandsdatendateneingang ansprechenden Schalter aufweisend, der ausgelegt ist, von einer der mehreren Übertragungsbetriebsarten in eine andere von den mehreren Übertragungsbetriebsarten zu schalten.

**15.** Vorrichtung nach Anspruch 13 oder Anspruch 14, wobei der adaptive Empfangsprozess ferner einen Messschaltkreis zum Messen von Interferenz- und Rauschanzeichen der empfangenen Frequenzbereichssignale und zum Bereitstellen der Anzeichen an einem Übertragungskanal-Rückkopplungsausgang aufweist.

**16.** Vorrichtung nach einem der Ansprüche 13 bis 15, ferner erste und zweite Empfangswegantennen (152, 162) aufweisend, wobei die ersten und zweiten Empfangswegantennen (152, 162) zueinander orthogonal polarisiert sind.

**17.** Vorrichtung nach einem der Ansprüche 13 bis 15, wobei die Vorrichtung ferner einen zugeordneten Rückwärtskanal (127) aufweist, um die Kanalzustandsdaten einem Übertrager (105) bereitzustellen.

**18.** Vorrichtung nach einem der Ansprüche 13 bis 16, wobei der Empfangsprozessor (170) ferner Mittel aufweist, um entsprechend den Betriebsartsteuerinformationen, die durch einen Übertrager (105) bereitgestellt werden, in eine spezielle Übertragungsbetriebsart zu schalten.

**19.** Kommunikationsverfahren, umfassend:

Bestimmen (465) eines Zustands eines Übertragungskanals (115) auf der Basis der Signale, die über den Kanal empfangen werden;

**dadurch gekennzeichnet, dass** das Verfahren ferner umfasst:

Auswählen (410) einer Übertragungsbetriebsart aus mehreren Übertragungsbetriebsarten auf Basis des Übertragungskanalzustands;
Umformen (420) eines Informationssymbols in erste und zweite unterträgersignale über einen Umformungsprozess, der durch die ausgewählte Übertragungsbetriebsart vorgeschrieben ist, wobei das Informationssymbol auf eine Übertragungssignalmatrix abgebildet wird, die sich auf die Betriebsart bezieht, die aus den mehreren Übertragungsbetriebsarten ausgewählt wurde; und
Übertragen (435) der Unterträgersignale über den Übertragungskanal (115) durch ein Paar orthogonal polarisierter Übertragungsantennen (136, 146).

**20.** Verfahren nach Anspruch 19, wobei das Übertragen (435) ein gleichzeitiges Übertragen der ersten und zweiten Unterträgersignale umfasst.

**21.** Verfahren nach Anspruch 19 oder Anspruch 20, wobei das Übertragen (435) umfasst:

Umwandeln eines jeden Unterträgersignals in ein Frequenzbereichssignal; und
Umwandeln (425) eines jeden Frequenzbereichsignals in ein Zeitbereichssignal.

**22.** Verfahren nach Anspruch 21, wobei das Umwandeln (425) eines jeden Frequenzbereichssignals in ein Zeitbereichssignal ein Umwandeln über eine inverse schnelle Fouriertransformation umfasst.

**23.** Verfahren nach Anspruch 20 oder Anspruch 21, wobei das Übertragen (435) ferner das Umwandeln (430) eines jeden Zeitbereichssignals in ein Funkfrequenzsignal umfasst.

**24.** Verfahren nach einem der Ansprüche 20 bis 22, wobei das Informationssymbol auf eine Übertragungssignalmatrix abgebildet wird, die erste und zweite Signalvektoren für das Erzeugen der ersten und zweiten Unterträgersignale aufweist.

**25.** Verfahren nach einem der Ansprüche 20 bis 23, ferner ein Empfangen (440) der Unterträgersignale über den Übertragungskanal durch ein Paar orthogonal polarisierter Empfangsantennen (150, 160) umfassend.

**26.** Verfahren nach Anspruch 25, ferner ein Umwandeln (455) der ersten und zweiten Unterträgersignale über einen Umformungsprozess umfassend, der durch die Übertragungsbetriebsart vorgeschrieben ist, wobei die Unterträgersignale auf eine Übertragungssignalmatrix abgebildet werden, die erste und zweite Signalvektoren für das Wiederherstellen des Informationssymbols aufweist.

**27.** Kommunikationsverfahren, **gekennzeichnet durch**:

Empfangen (440) erster und zweiter Unterträgersignale aus einem Übertragungskanal (115) auf einem Paar orthogonal polarisierter Empfangsantennen (150, 160);
Umformen (455) der ersten und zweiten Unterträgersignale in ein wiederhergestelltes Informationssymbol über einen Umformungsprozess, der **durch** eine von mehreren Übertragungsbetriebsarten vorgeschrieben ist, wobei die Unterträgersignale auf eine Empfangssignalmatrix abgebildet werden, die erste und zweite Signalvektoren für das Erzeugen des wiederhergestellten Informationssymbols aufweist; und
Messen (460) der Kanalzustände des Übertragungskanals (115), wobei die Übertragungsbetriebsart auf der Basis der Kanalzustände ausgewählt wird.

**28.** Verfahren nach Anspruch 27, wobei das Empfangen (440) ein Empfangen der Unterträgersignale als Funkfrequenzsignale umfasst.

**29.** Verfahren nach Anspruch 28, wobei das Empfangen (440) ferner ein Umwandeln (445) eines jeden Funkfrequenzsignals in ein Zeitbereichssignal umfasst.

**30.** Verfahren nach Anspruch 29, wobei das Empfangen (440) ferner ein Umwandeln (450) eines jeden Zeitbereichssignals in ein Frequenzbereichssignal umfasst.

**31.** Verfahren nach Anspruch 30, wobei das Umwandeln durch einen schnellen Fouriertransformationsprozess ausgeführt wird.

**32.** Verfahren nach einem der Ansprüche 27 bis 31, ferner umfassend, dass einem Übertrager die Kanalzustandsdaten auf Basis der Kanalzustände für nachfolgende Übertragungen bereitgestellt werden.

**Revendications**

**1.** Dispositif de transmission adaptative (105), comprenant :

une première entrée (122) pour recevoir des données sur l'état de canal d'un canal de transmission (115) ; et
une seconde entrée (124) pour recevoir un symbole d'information à transmettre sur le canal de transmission (115) ;

**caractérisé en ce que** le dispositif comprend, de plus :

une mémoire pour stocker une pluralité de matrices de signaux de transmission adressables, chaque matrice comportant des premiers et seconds vecteurs de signaux permettant de produire des signaux du domaine fréquentiel;
un processeur de transmission adaptative (120) couplé à la première entrée et à la seconde entrée (122, 124), configuré pour mettre en correspondance le symbole d'information avec l'une des matrices de signaux de transmission correspondant à l'un d'une pluralité de modes de transmission sélectionné sur la base des données d'état du canal et pour produire des premier et second signaux du domaine fréquentiel dans lequel chaque signal du domaine fréquentiel est une sous-porteuse d'une partie du symbole d'information ;
une première sortie (126) pour fournir le premier signal du domaine fréquentiel; et
une seconde sortie (128) pour fournir le second signal du domaine fréquentiel.

2. Dispositif selon la revendication 1 comprenant, de plus, un circuit sélecteur couplé à la première entrée (122) et configuré pour mesurer les données d'état du canal et sélectionner l'un d'une pluralité de modes de transmission.

3. Dispositif selon la revendication 2, dans lequel le circuit sélecteur comporte un commutateur permettant de commuter d'un mode de transmission à un autre mode de transmission sur la base d'un changement dans les données d'état du canal.

4. Dispositif selon l'une quelconque des revendications précédentes, dans lequel la pluralité des modes de transmission comporte :

un mode par défaut, dans lequel les premier et second signaux du domaine fréquentiel sont essentiellement égaux ;
un mode de transmission à double symbole, dans lequel le premier signal du domaine fréquentiel et le second signal du domaine fréquentiel sont indépendants;
un mode de codage de bloc à fréquence spatiale, dans lequel les premier et second signaux du domaine fréquentiel sont fournis à des niveaux multiples de gain en diversité ; et
un mode de transmission de rapport maximal, dans lequel les premier et second signaux du domaine fréquentiel sont fournis au gain de signal.

5. Dispositif selon l'une quelconque des revendications précédentes, comprenant, de plus, des première et seconde voies de transmission, dans lequel les première et seconde voies de transmission incluent, chacune :

un processeur de transformée de Fourier rapide inverse (132, 142) permettant de convertir un signal du domaine fréquentiel en un signal du domaine temporel ; et
un émetteur (134, 144) pour convertir le signal du domaine temporel en un signal de fréquence radioélectrique.

6. Dispositif selon la revendication 5, dans lequel l'émetteur (134, 144) comprend, de plus, un canal aller spécialisé (125) permettant de fournir des signaux de commande de mode à un récepteur (110).

7. Dispositif selon l'une quelconque des revendications précédentes comprenant, de plus, un dispositif récepteur (110), le dispositif récepteur comportant :

une entrée de données sur l'état du canal pour recevoir des données d'état de canal représentatives du canal de transmission (115) ;
des première et seconde entrées du récepteur (176, 178), configurées pour recevoir des premier et second signaux respectifs du domaine fréquentiel transmis sur le canal de transmission (115), où chaque signal du domaine fréquentiel est une sous-porteuse d'une partie du symbole d'information ;
une mémoire pour stocker une pluralité de matrices de signaux de réception adressables, dans laquelle chaque matrice est adaptée pour être combinée aux premier et second signaux du domaine fréquentiel en vue de récupérer le symbole d'information ; et
un processeur de réception adaptative (170) configuré pour mettre en correspondance les premier et second signaux du domaine fréquentiel avec l'une des matrices de signaux de réception correspondant au mode sélectionné de la pluralité de modes de transmission en vue de récupérer le symbole d'information.

8. Dispositif selon la revendication 7, le dispositif récepteur (110) comprenant, de plus, un commutateur qui, en réponse à l'entrée de données d'état du canal, est configuré pour commuter de l'un des modes de la pluralité de modes de transmission à un autre mode de la pluralité des modes de transmission.

9. Dispositif selon la revendication 7 ou la revendication 8, dans lequel le processeur de réception adaptative (170) comporte, de plus, un circuit de mesure permettant de mesurer des index d'interférence et de bruit des signaux du domaine fréquentiel reçus, et de fournir les index sur une sortie de retour du canal de transmission.

10. Dispositif selon l'une quelconque des revendication 7 à 9, comprenant, de plus, des première et seconde antennes de voies de réception (152, 162) dans lequel les première et seconde antennes de voies de réception (152, 162) sont polarisées de façon orthogonale l'une par rapport à l'autre.

11. Dispositif selon l'une quelconque des revendications 7 à 9, dans lequel le dispositif récepteur (110) comprend, de plus, un canal de retour spécialisé (127) pour fournir les données d'état de canal à un émetteur (105).

12. Dispositif selon l'une quelconque des revendications 7 à 10, dans lequel le processeur de réception (170) comporte, de plus, des moyens permettant de commuter à un mode de transmission particulier selon une information de commande de mode fournie par un émetteur (105).

13. Dispositif récepteur (110) **caractérisé par** :

   une entrée de données d'état du canal destinée à recevoir des données d'état du canal représentatives d'un canal de transmission (115) ;
   des première et seconde entrées de récepteur (176, 178), configurées pour recevoir des premier et second signaux respectifs du domaine fréquentiel transmis sur le canal de transmission (115), où chaque signal du domaine fréquentiel est une sous-porteuse d'une partie d'un symbole d'information ;
   une mémoire permettant de stocker une pluralité de matrices de signaux de réception adressables, dans lequel chaque matrice est adaptée pour être combinée avec les premier et second signaux du domaine fréquentiel pour récupérer un symbole d'information ; et
   un processeur de réception adaptative (170) configuré pour mettre en correspondance les premier et second signaux du domaine fréquentiel avec l'une des matrices de signaux de réception correspondant à un mode d'une pluralité de modes de transmission sur la base des données d'état du canal, afin de récupérer le symbole d'information.

14. Dispositif selon la revendication 13 comprenant, de plus, un commutateur qui, en réponse à l'entrée de données d'état du canal, est configuré pour commuter de l'un des modes de la pluralité de modes de transmission à un autre mode de la pluralité des modes de transmission.

15. Dispositif selon la revendication 13 ou la revendication 14, dans lequel le processus de réception adaptative comprend, de plus, un circuit de mesure pour mesurer des index d'interférence et de bruit des signaux du domaine fréquentiel, reçus, et pour fournir les index sur une sortie de retour du canal de transmission.

16. Dispositif selon l'une quelconque des revendications 13 à 15, comportant, de plus, des première et seconde antennes des voies de réception (152, 162) dans lequel les première et seconde antennes des voies de réception (152, 162) sont polarisées de façon orthogonale l'une par rapport à l'autre.

17. Dispositif selon l'une quelconque des revendications 13 à 15, dans lequel le dispositif comprend, de plus, un canal de retour spécialisé (127) permettant de fournir les données d'état du canal à un émetteur (105).

18. Dispositif selon l'une quelconque des revendications 13 à 16, dans lequel le processeur de réception (170) comporte, de plus, des moyens pour commuter à un mode de transmission particulier selon une information de commande de mode fournie par un émetteur (105).

19. Procédé de communication, comprenant de :

   déterminer (465) un état d'un canal de transmission (115) sur la base de signaux reçus sur le canal ;

   **caractérisé en ce que** le procédé comprend, de plus, le fait de :

sélectionner (410) un mode de transmission parmi une pluralité de mode de transmission sur la base de l'état du canal de transmission ;

transformer (420) un symbole d'information en un premier signal et en un second signal de sous-porteuse par l'intermédiaire d'un processus de transformation prescrit par le mode de transmission sélectionné, dans lequel le symbole d'information est mis en correspondance avec une matrice de signaux de transmission correspondant au mode sélectionné de la pluralité de modes de transmission ; et

transmettre (435) les signaux de sous-porteuse sur le canal de transmission (115) par l'intermédiaire d'une paire d'antennes de transmission polarisées de façon orthogonale (136, 146).

20. Procédé selon la revendication 19, dans lequel la transmission (435) comprend le fait de transmettre simultanément les premier et second signaux de sous-porteuse.

21. Procédé selon la revendication 19 ou la revendication 20, dans lequel la transmission (435) comprend de :

convertir chaque signal de sous-porteuse en un signal du domaine fréquentiel; et
convertir (425) chaque signal du domaine fréquentiel en un signal de domaine temporel.

22. Procédé selon la revendication 21, dans lequel convertir (425) chaque signal du domaine fréquentiel en un signal du domaine temporel comprend une conversion par l'intermédiaire d'une transformée de Fourier rapide inverse.

23. Procédé selon la revendication 20 ou la revendication 21, dans lequel la transmission (435) comprend, de plus, le fait de convertir (430) chaque signal du domaine temporel en un signal de fréquence radioélectrique.

24. Procédé selon l'une quelconque des revendications 20 à 22, dans lequel le symbole d'information est mis en correspondance avec une matrice de signaux de transmission comportant des premier et second vecteurs de signal pour produire les premier et second signaux de sous-porteuse.

25. Procédé selon l'une quelconque des revendications 20 à 23, comprenant encore le fait de recevoir (440) les signaux de sous-porteuse sur le canal de transmission par l'intermédiaire d'une paire d'antennes de réception polarisées de façon orthogonale (150, 160).

26. Procédé selon la revendication 25, comprenant, de plus, le fait de convertir (455) les premier et second signaux de sous-porteuse par l'intermédiaire d'un procédé de transformation prescrit par le mode de transmission, dans lequel les signaux de sous-porteuse sont mis en correspondance avec une matrice de signaux de transmission comportant des premier et second vecteurs de signal pour restaurer le symbole d'information.

27. Procédé de communication, **caractérisé par** le fait de:

recevoir (440) des premier et second signaux de sous-porteuse à partir d'un canal de transmission (115) sur une paire d'antennes de réception polarisées de façon orthogonale (150, 160) ;

transformer (455) les premier et second signaux de sous-porteuse en un symbole d'information restauré par l'intermédiaire d'un procédé de transformation prescrit par un mode d'une pluralité de modes de transmission, dans lequel les signaux de sous-porteuse sont mis en correspondance avec une matrice de signaux de réception présentant des premier et second vecteurs de signal pour produire le symbole d'information restauré ; et

mesurer (460) les états du canal de transmission (115), dans lequel le mode de transmission est sélectionné sur la base des états du canal.

28. Procédé selon la revendication 27, dans lequel la réception (440) comprend le fait de recevoir les signaux de sous-porteuse sous la forme de signaux de fréquence radioélectrique.

29. Procédé selon la revendication 28, dans lequel la réception (440) comprend, de plus, le fait de convertir (445) chaque signal de fréquence radioélectrique en un signal du domaine temporel.

30. Procédé selon la revendication 29, dans lequel la réception (440) comprend, de plus, le fait de convertir (450) chaque signal du domaine temporel en un signal du domaine fréquentiel.

31. Procédé selon la revendication 30, dans lequel la conversion est effectuée par un procédé de transformée de Fourier rapide.

**32.** Procédé selon l'une quelconque des revendications 27 à 31 comprenant, de plus, le fait de fournir des données sur l'état du canal sur la base des états de canal à un émetteur en vue de transmissions ultérieures.

## FIG. 1

## FIG. 2

```
┌──────────────────────────────────────────────────────────────────┐
│ TRANSMISSION PROCESSOR        ┌─220┐              ┌─210┐           │
│                               │GENERATING│  ◄───  │GENERATING│     │  SYMBOL STREAM
│ TO TRANSMITTER   ◄─────       │  TSM     │        │DATA MATRIX│    │  c₁, c₂, c₃, ...
│                               └──────────┘        └──────────┘     │
│                                    ▲                    │          │
│                        215         │             205    ▼          │  CHANNEL
│                     ┌─GENERATING──┐         ┌───────────────┐      │  CONDITIONS AND
│                     │PRE-TRANSMISSION│ ───► │    MODE       │ ◄────│  MEASUREMENTS
│                     │   MATRIX      │       │   CONTROL     │      │
│                     └──────────────┘        └───────────────┘      │
│          MODE CONTROL SIGNAL TRANSMITTER            │              │
│       ◄─────────────────────────────────────────────              │
└──────────────────────────────────────────────────────────────────┘
```

## FIG. 3

```
┌──────────────────────────────────────────────────────────────────┐
│ FROM RECEIVER ─────► ┌GENERATING┐        ┌ESTIMATING┐             │  SYMBOL STREAM
│                      │   RDM    │  ───►   │ SYMBOLS  │             │  c₁, c₂, c₃, ...
│                      └──────────┘         └──────────┘            │
│   MODE CONTROL           315   310              320               │
│ SIGNAL FROM RECEIVER             ┌GENERATING┐                     │
│                                  │ WEIGHTS  │                     │
│                          305     └──────────┘                     │
│                               ┌CHANNEL──┐                         │  CHANNEL
│                        ──────►│ESTIMATION│ ───────────────────────│  CONDITIONS AND
│                               └──────────┘                        │  MEASUREMENTS
│ RECEIVE PROCESSOR                                                 │
└──────────────────────────────────────────────────────────────────┘
                    170
```

## FIG. 4

```
┌──────────────────────────────────────────────────────┐
│                    DEFAULT MODE                        │
└──────────────────────────────────────────────────────┘
   ▲          ▲ TRANSITION REGION ▲              ▲
   │          │                    │              │
┌─────┐     ┌──────┐           ┌──────┐
│ MRT │◄───►│ SFBC │◄─────────►│ DST  │
└─────┘     └──────┘           └──────┘
──────────────────────────────────────────────►
                     Φ₁            Φ₂

        MEASURE OF CHANNEL CONDITIONS, Φ
```

MEASURE OF CHANNEL CONDITIONS, $\Phi$

## FIG. 5

### 400

405

```
┌─────────────────────────────────┐
│             BEGIN               │
└─────────────────────────────────┘
```

SELECT TRANSMISSION MODE ~ 410

TRANSFORM INFORMATION SYMBOL ~ 420

CONVERT FREQUENCY-DOMAIN TO TIME-DOMAIN ~ 425

CONVERT TIME-DOMAIN TO RADIO-FREQUENCY ~ 430

TRANSMIT ~ 435

RECEIVE ~ 440

CONVERT RF TO TIME-DOMAIN ~ 445

CONVERT TIME-DOMAIN TO FREQUENCY-DOMAIN ~ 450

TRANSFORM/RESTORE ~ 455

CONTINUE ~ 470

415
CONTROL MODE

465
DETERMINE CONDITIONS

460
MEASURE

**EP 1 302 042 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5471647 A
- CA 2245240